# EUROPÄISCHE PATENTANMELDUNG

(11) **EP 0 887 221 A1**
(43) Veröffentlichungstag der Anmeldung: **30.12.1998**
(21) Anmeldenummer: 98110970.5
(22) Anmeldetag: 16.06.1998
(51) Int. Cl.: B60K 41/28, B60K 41/08

(54) **Verfahren zur Durchführung von Schaltvorgängen in einem automatisierten mechanischen Schaltgetriebe, insbesondere für Dieselmotoren**

(30) Priorität: 24.06.1997 DE 19726724
(71) Anmelder: Daimler-Benz Aktiengesellschaft, 70567 Stuttgart (DE)
(72) Erfinder: Binz, Ralf, 71069 Sindelfingen (DE); Brock, Thomas, 85521 Ottobrunn (DE); Nester, Ulrich, 70329 Stuttgart (DE)

(57) **Zusammenfassung**

Es wird ein Verfahren zur Durchführung von Schaltvorgängen in einem automatisierten mechanischen Schaltgetriebe vorgeschlagen, das über eine automatisierte Kupplung mit einer Brennkraftmaschine, insbesondere einem Dieselmotor, verbunden ist. Das Soll-Motordrehmoment (MDsoll) ist im wesentlichen über ein Fahrpedal (10) oder einen Fahrgeschwindigkeitsregler oder -begrenzer (17, 18) vorgebbar. Das Soll-Motordrehmoment wird bei Getriebeschaltvorgängen durch Eingriff einer elektronischen Steuereinrichtung wie folgt verändert: Dem für die Getriebesteuerung vorgesehenen Bereich der elektronischen Steuereinrichtung wird ständig das Soll-Motordrehmoment (MDsoll) vorgeführt. Bei manuell oder automatisch eingeleiteten Getriebeschaltvorgängen erfolgt ein Umschaltvorgang auf die Vorgabe des Soll-Motordrehmoments durch die elektronische Getriebesteuerung, die dieses Soll-Motordrehmoment (GW-MD) in Abhängigkeit von Schaltparametern errechnet und/oder Schaltkennfeldern oder -kennlinien entnimmt. Nach Abschluß des Schaltvorgangs erfolgt wiederum ein Umschaltvorgang auf die Vorgabe des Soll-Motordrehmoments (MDsoll) durch das Fahrpedal (10) oder den Geschwindigkeitsregler oder -begrenzer (17, 18). Durch das enge Zusammenwirken zwischen Getriebesteuerung und Motorsteuerung sowie durch die jeweiligen Rückmeldungen kann ein besonders komfortables und ruckfreies Schalten bei automatisierten mechanischen Schaltgetrieben erreicht werden, insbesondere in Verbindung mit Dieselmotoren.

## Beschreibung

Die Erfindung betrifft ein Verfahren zur Durchführung von Schaltvorgängen in einem automatisierten mechanischen Schaltgetriebe, das über eine automatisierte Kupplung mit einer Brennkraftmaschine, insbesondere einem Dieselmotor verbunden ist, wobei das Soll-Motordrehmoment im wesentlichen über ein Fahrpedal und/oder einen Fahrgeschwindigkeitsregler oder -begrenzer vorgebbar ist, und wobei das Soll-Motordrehmoment bei Getriebeschaltvorgängen durch Eingriff einer elektronischen Steuereinrichtung verändert wird.

Automatische Getriebe mit hydraulischen Drehmomentwandlern sind seit längerem bekannt, beispielsweise aus der DE 40 37 092 A1, der DE 42 41 171 A1 oder der WO 94/01701. Sie dienen der Erleichterung und Vereinfachung des Fahrens von Kraftfahrzeugen, wobei insbesondere bei dichtem Verkehr eine Konzentration auf diesen ohne Ablenkungen erleichtert wird. In den letzten Jahren wurde der Komfort solcher Automatikgetriebe immer mehr verbessert, so daß heute bereits ein sehr komfortabler Standart erreicht ist, der das Anfahren und Schalten nahezu ruckfrei ermöglicht. Der Nachteil dieser Automatikgetriebe besteht darin, daß sie relativ groß, schwer und teuer sind, was ihren Einsatz vor allem in Kleinfahrzeugen erschwert.

Zur Vermeidung dieser Nachteile wurden bereits für Kleinfahrzeuge automatisierte Schaltgetriebe entwickelt, die im wesentlichen aus einem klassischen mechanischen Schaltgetriebe bestehen, dessen Schaltvorgänge jedoch automatisiert sind. Entsprechend wird die klassische fußbetätigte Kupplung durch eine automatisierte Kupplung ersetzt. Derartige automatisierte Schaltgetriebe sind beispielsweise aus der DE 36 27 718 A1 oder der EP-A-0 633 155 bekannt. Sie können gegenüber Automatikgetrieben in leichterer Bauweise und kleinvolumiger bei geringeren Kosten hergestellt werden. Auch bei solchen automatisierten Schaltgetrieben wird in ähnlicher Weise wie bei Automatikgetrieben ein hoher Schaltkomfort und ein ruckfreies Schalten gefordert, das hier schwerer realisierbar ist. Aus dem angegebenen Stand der Technik ist es grundsätzlich bekannt, jeweils während des Schaltvorgangs das Motordrehmoment zu reduzieren. Diese prinzipielle Erkenntnis reicht jedoch gewohnlich noch nicht zur Erzielung eines hohen Schaltkomforts aus, da hierfür eine enge "Zusammenarbeit" zwischen Motorsteuerung und Getriebesteuerung erforderlich ist.

Eine Aufgabe der vorliegenden Erfindung besteht daher darin, ein Verfahren der eingangs genannten Gattung mit hohem Schaltkomfort zu schaffen, bei dem das Zusammenwirken zwischen Getriebesteuerung und Motorsteuerung verbessert ist, und das insbesondere für Dieselmotoren geeignet ist.

Diese Aufgabe wird erfindungsgemäß durch die folgenden Verfahrensschritte gelöst:
Dem für die Getriebesteuerung vorgesehenen Bereich der elektronischen Steuereinrichtung wird ständig das Soll-Motordrehmoment zugeführt,
bei manuell oder automatisch eingeleiteten Getriebeschaltvorgängen erfolgt ein Umschaltvorgang auf die Vorgabe des Soll-Motordrehmoments durch die elektronische Getriebesteuerung, die dieses Soll-Motordrehmoment in Abhängigkeit von Schaltparametern errechnet und/oder aus Schaltkennfeldern oder -kennlinien entnimmt, und
nach Abschluß des Schaltvorgangs erfolgt wiederum ein Umschaltvorgang auf die Vorgabe des Soll-Motordrehmoments durch das Fahrpedal oder dem Geschwindigkeitsregler oder -begrenzer.

Das erfindungsgemäße Verfahren realisiert eine Schnittstelle zwischen dem für die Motorsteuerung zuständigen Bereich und dem für die Getriebesteuerung zuständigem Bereich in der elektronischen Steuereinrichtung, die in einem gemeinsamen Steuergerät untergebracht ist. Hierdurch werden Schaltvorgänge durch Zusammenwirkung von Motorsteuerung, Getriebesteuerung so optimiert, daß ein verbesserter Schaltkomfort und ein ruckfreieres Schalten erzielt werden kann. Das Zusammenwirken wird insbesondere durch die gegenseitigen Rückmeldungen erreicht.

Durch die in den Unteransprüchen aufgeführten Maßnahmen sind vorteilhafte Weiterbildungen und Verbesserungen des im Anspruch 1 angegebenen Verfahrens möglich.

Bei Getriebeschaltvorgängen werden jeweils in Phasen aufeinanderfolgende Regelvorgänge für das Soll-Motordrehmoment seitens der Getriebesteuerung eingeleitet, wobei in vorteilhafter Weise die Vorgabe des Soll-Motordrehmoments während eines Getriebeschaltvorgangs in Form eines Getriebewunsch-Motordrehmoments und/oder einer Getriebewunsch-Motordrehzahl erfolgt, so daß auf diese Weise die Getriebesteuerung automatisch in die Motorsteuerung eingreift.

Verbesserte und optimierte Schaltvorgänge werden insbesondere dadurch erreicht, daß während eines Getriebeschaltvorgangs zunächst in einer Abregelphase das Motordrehmoment abgeregelt, dann in einer Drehzahlregelphase die Drehzahl auf einen vorgegebenen Wert geregelt und dann in einer Aufregelphase das Motordrehmoment wieder hochgeregelt wird. Das Motordrehmoment wird dabei in den Abregelphasen und Aufregelphasen vorzugsweise durch Sollwert-Rampen von der Getriebesteuerung vorgegeben, wobei das Ende der Rampenfunktion und der Übergang in den fahrergesteuerten Betrieb von der Momentenanfordernung des Fahrers abhängt.

Am Anfang und bei den Übergängen zwischen den Phasen werden Umschaltvorgänge zur Umschaltung auf die der jeweiligen Phase zugeordnete Vorgabefunktion durchgeführt, wobei in vorteilhafter Weise die Umschaltungen durch hintereinander angeordnete Umschalteinrichtungen durchgeführt werden. Somit kann durch Betätigung der jeweiligen Umschalteinrichtung auf die jeweils vorgesehene Vorgabefunktion umgeschaltet werden, die dann das augenblicklich wirkende Soll-Motordrehmoment vorgibt.

Das Soll-Motordrehmoment wird dem für die Getriebesteuerung zuständigen Bereich der elektronischen Getriebesteuerung vorteilhafterweise sowohl als begrenztes Fahrerwunschmoment, als auch als der Motorsteuerung tatsächlich vorgegebenes Soll-Motordrehmoment zugeführt. Durch diese Rückmeldungen erfährt die Getriebesteuerung, welche Funktion gerade wirksam geschaltet ist.

Nach jedem Umschaltvorgang wird eine entsprechende Statusmeldung ausgegeben, auf die alle Bereiche der elektronischen Steuereinrichtung zugreifen können.

Das Soll-Motordrehmoment wird der Motorsteuerung in Form einer der Brennkraftmaschine zuzuführenden Kraftstoffmenge zugeführt, aus der für die Rückmeldungen an die Getriebesteuerung die entsprechenden Drehmomentwerte abgeleitet werden.

Das von der Getriebesteuerung jeweils als Wunsch vorgegebene Soll-Motordrehmoment wird zweckmäßigerweise in Abhängigkeit der verschiedenen jeweiligen Schaltvorgänge in Abhängigkeit von Getriebeschutzvorgaben begrenzt, um Überlastungen zu vermeiden.

Ausführungsbeispiele des erfindungsgemäßen Verfahrens sind in der Zeichnung dargestellt und in der nachfolgenden Beschreibung näher erläutert. Es zeigen:
- Figur 1: eine schematisch Übersichtsdarstellung der bei einem Getriebeschaltvorgang prinzipiell gesteuerten Abläufe,
- Figur 2: eine schematische Darstellung einer elektronischen Steuereinrichtung zur Steuerung eines Dieselmotors, einer automatisierten Kupplung und eines automatisierten mechanischen Schaltgetriebes,
- Figur 3: die Darstellung der Reduzierung des Motordrehmoments bei einem Schaltvorgang und
- Figur 4: ein detailliertes Ablaufdiagramm als Ausführungsbeispiel zur Erläuterung des erfindungsgemäßen Verfahrens.

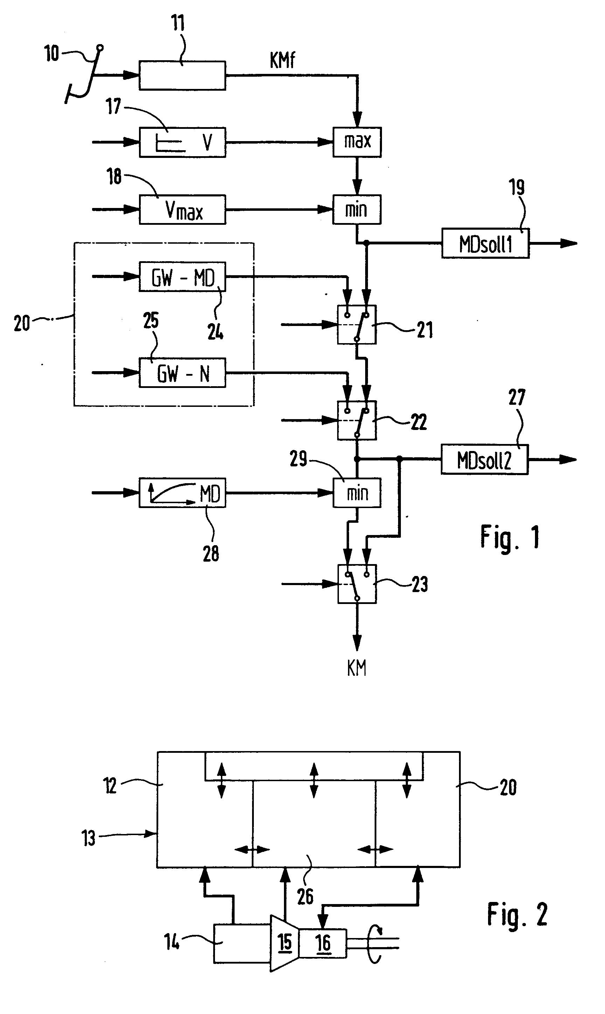

Zunächst soll die Übersichtsdarstellung gemäß Figur 1 erläutert werden. Der Fahrer eines Kraftfahrzeugs gibt das von ihm gewünschte Motordrehmoment (MD) über ein Fahrpedal 10 vor. Aus der Winkelstellung des Fahrpedals 10 wird in einer Fahrerwunsch-Vorgabeeinrichtung 11 die entsprechende Kraftstoffmenge (KMf) für die Brennkraftmaschine vorgegeben, wobei das entsprechende Signal einer elektronischen Motorsteuerung 12 zugeführt wird, die einen Bereich einer elektronischen Steuereinrichtung 13 zur Steuerung der Brennkraftmaschine 14, der Kupplung 15 und des Getriebes 16 bildet. Auf das vom Fahrer vorgegebenen Kraftstoffmengensignal KMf wirkt noch ein Geschwindigkeitsregler 17 und ein Geschwindigkeitsbegrenzer 18 ein, sofern im Fahrzeug die entsprechenden Einrichtungen vorgesehen sind. Beim Einschalten des Geschwindigkeitsreglers 17 übernimmt dieser die Vorgabe des Kraftstoffmengensignals, der Geschwindigkeitsbegrenzer 18 begrenzt dieses Kraftstoffmengensignal bei Erreichen der eingestellten maximal zulässigen Fahrgeschwindigkeit auf den entsprechenden Wert. Dieses gesamte, überwiegend vom Fahrer beeinflußbare Kraftstoffmengensignal wird in einer Umrechnungsstufe 19 in ein entsprechendes erstes Soll-Motordrehmoment MDsoll 1 umgerechnet und einer elektronischen Getriebesteuerung 20 rückgemeldet, die ebenfalls ein Bestandteil der elektronischen Steuereinrichtung 13 bildet.

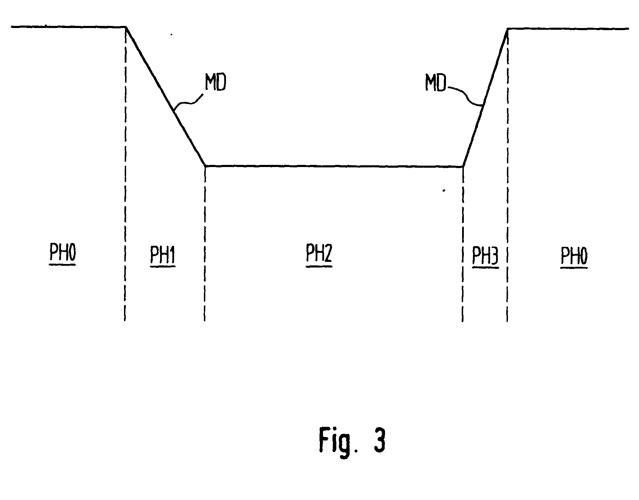

Das vom Fahrer vorgegebene Kraftstoffmengensignal KMf wird im Normalfall, d.h., wenn gerade kein Schaltvorgang des mechanischen Getriebes 16 stattfindet, in eventuell durch den Geschwindigkeitsregler 17 oder den Geschwindigkeitsbegrenzer 18 modifizierter Form direkt der Motorsteuerung 12 zugeführt. Dies erfolgt dadurch, daß in Figur 1 drei hintereinander geschaltete Umschalteinrichtungen 21, 22, 23 in der dargestellten Schaltposition liegen. Wird nun manuell durch den Fahrer gesteuert oder automatisch in Abhängigkeit der jeweiligen Drehzahlverhältnisse durch die Getriebesteuerung 20 gesteuert ein Schaltvorgang durchgeführt, so wird zunächst die erste Umschalteinrichtung 21 in ihre zweite Schaltstellung umgelegt, so daß jetzt nicht mehr das vom Fahrer vorgegebene Kraftstoffmengensignal, sondern ein von der Getriebesteuerung 20 vorgegebenes Kraftstoffmengensignal der Motorsteuerung zugeführt wird. Dieses entspricht einem in der Getriebesteuerung 20 berechneten Getriebewunsch-Motordrehmoment GW-MD, das in einer entsprechenden Vorgabestufe 24 in ein entsprechendes Kraftstoffmengensignal umgerechnet wird. Bei einem Schaltvorgang wird gemäß Figur 3 ausgehend von einer Phase Null (PH0) zunächst in einer Phase 1 (PH1) das Motordrehmoment entlang einer Abwärtsrampe abgeregelt. Die entsprechende Reduzierung des Kraftstoffmengensignals wird durch die Vorgabestufe 24 vorgegeben. Danach wird in einer Phase 2 (PH2) die Drehzahl auf einen für den entsprechenden Schaltvorgang optimalen Wert eingeregelt. Hierzu wird am Ende der Phase 1 die Umschalteinrichtung 22 betätigt, so daß nun das Kraftstoffmengensignal durch eine Vorgabestufe 25 vorgegeben wird, die ein einer Getriebewunsch-Drehzahl GW-M entsprechendes Kraftstoffmengensignal abgibt und über die Umschalteinrichtung 22 der Motorsteuerung 12 zuführt. Am Ende der Phase 2 erfolgt dann wieder eine Aufregelung des Drehmoments entlang einer Aufwärtsrampe in einer Phase 3 (PH3). Hierzu wird die Umschalteinrichtung 22 wieder in ihre ursprüngliche Stellung gebracht, so daß wieder die Vorgabestufe 24 über die erste Umschalteinrichtung 21 wirksam ist und ein entsprechendes Signal zur Aufregelung des Drehmoments auf einen neuen Vorgabewert erzeugt. Dieser ist dann wieder in einer neuen Phase Null nach Abschluß des Schaltvorgangs wirksam. Zu diesem Zeitpunkt werden beide Umschalteinrichtungen 21, 22 wieder in ihre ursprüngliche, in Figur 1 dargestellte Stellung gebracht, so daß für den weiteren Fahrbetrieb wieder der Fahrerwunsch maßgeblich ist.

Die automatische Betätigung der Kupplung 15 durch eine elektronische Kupplungssteuerung 26, die ebenfalls einen Bestandteil der elektronischen Steuereinrichtung 13 bildet, stellt einen notwendigen Vorgang während des Schaltvorgangs dar. Dieser ist jedoch hier nicht näher beschrieben, da er für den Gegenstand der vorliegenden Erfindung nicht von Bedeutung ist. Es wird hierzu auf den eingangs genannten Stand der Technik sowie auf die DE-C-34 02 872 verwiesen.

Das nach den beiden Umschalteinrichtungen 21, 22 anliegende Kraftstoffmengensignal wird über eine weitere Umrechnungsstufe 27 als weiteres Motordrehmoment-Sollwertsignal der Getriebesteuerung 20 zugeführt, so daß dieser sowohl das Fahrerwunsch-Motordrehmoment, wie auch ein eventuell davon abweichendes von der Getriebesteuerung beeinflußtes Wunschmotordrehmoment rückgemeldet wird.

Das am Ausgang der zweiten Umschalteinrichtung 22 anliegende Kraftstoffmengensignal wird nachfolgend noch einer Drehmomentbegrenzung für den Getriebeschutz unterworfen. Hierzu greift eine Drehmoment-Begrenzungstufe 28 auf ein Begrenzungsglied 29 ein, das in einem Parallelzweig und zur Zuführungsleitung zur Motorsteuerung angeordnet ist, und das mittels der dritten Umschalteinrichtung 23 unwirksam geschaltet werden kann. In der Regel wird diese dritte Umschalteinrichtung 23 jedoch nicht betätigt, und die Drehmoment-Begrenzungsstufe 28 gibt einen Begrenzungswert vor, der in Abhängigkeit vom jeweiligen Getriebegang besteht, um Getriebeüberlastungen zu vermeiden. Dies betrifft insbesondere Momente in den kleinen Gängen, Rückwärtsgängen oder Geländegängen. Jeweils bei Verlassen dieser kritischen Gänge wird die Umschalteinrichtung 23 wieder in die in Figur 1 dargestellte Schaltstellung zurückversetzt.

In Figur 2 sollen die Doppelpfeile innerhalb der elektronischen Steuereinrichtung 13 die gegenseitige Datenübertragung und Datenrückmeldungen kennzeichnen. Alle drei Bereiche, nämlich die Motorsteuerung 12, die Kupplungssteuerung 26 und die Getriebesteuerung 20 greifen auf einen gemeinsamen Programm- und Datenspeicher 30 zurück. Die Doppelpfeile zwischen der elektronischen Steuereinrichtung 13 einerseits und der Brennkraftmaschine 14, der automatisierten Kupplung 15 und dem automatisierten mechanischen Schaltgetriebe 16 andererseits sollen die Übertragung der jeweiligen Steuerbefehle beispielsweise für die Kraftstoffzumessung und Servoglieder zur Betätigung von Kupplung und Getriebe, sowie von Sensorsignalen, Drehzahl, Drehmoment, Temperatur, Stellung der Servoglieder, Winkelstellung des Fahrpedals und dergleichen kennzeichnen.

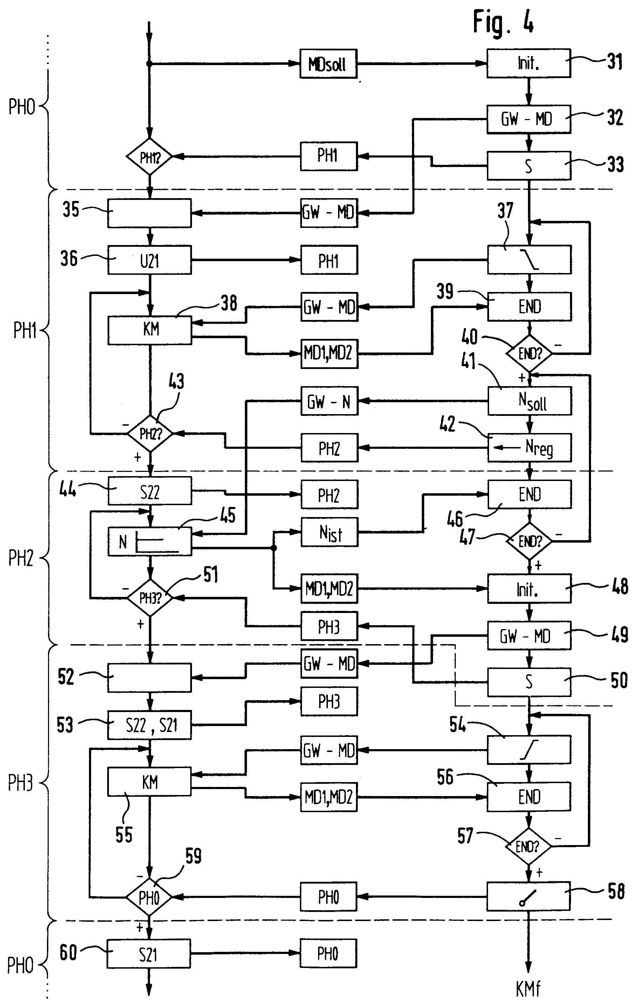

In dem in Figur 4 dargestellten Ablaufdiagramm ist ein Schaltvorgang im Detail anhand eines Ablaufdiagramms erläutert. Dieses Ablaufdiagramm ist durch vertikale strichpunktierte Linien in drei Bereiche unterteilt, von denen der linke die Motorsteuerung, der rechte die Getriebesteuerung und der mittlere globale Daten betrifft, die zwischen den Bereichen ausgetauscht werden. Die Erfindung betrifft somit de facto eine Schnittstelle zwischen Getriebesteuerung und Motorsteuerung.

Zu Beginn befindet sich das Getriebe in der Phase Null und der Getriebesteuerung wird ständig über die Umrechnungsstufen 19, 27 das Soll-Motordrehmoment MDsoll mitgeteilt. Wenn ein Schaltwunsch erkannt wird, wird die Abwärtsrampe zur Reduzierung des Motordrehmoments in einer Initialisierungsphase 31 initialisiert, und in einem Schritt 32 wird das Getriebewunsch-Motordrehmoment errechnet und der Motorsteuerung zugeführt, wo es zunächst noch nicht wirksam ist. In einer Schaltanforderungsstufe 33 wird der Motorseite mitgeteilt, ob ein automatischer Getriebedurchgriff eingeleitet werden muß. In jedem dieser Falle wird eine Statusmeldung zur Einleitung der Phase 1 (PH1) für den Schaltvorgang der Motorsteuerung mitgeteilt, worauf eine entsprechende Warteschleife 34 zur Phase 1 überleitet.

In der Motorsteuerung wird zunächst der entsprechende Pfad im Schritt 35 anhand des Getriebewunsch-Drehmoments durchgerechnet und dann wird im Schritt 36 die Umschalteinrichtung 21 betätigt und die Umschaltung quittiert, indem eine entsprechende Statusmeldung für die Umschaltung in die Phase 1 abgegeben wird. In der Getriebesteuerung wurde inzwischen durch die Schaltanforderungsstufe 33 die Ausgabe für das Drehmoment reduzierenden Rampe im Schritt 37 initiiert. Das der Rampenfunktion entsprechende Getriebewunsch-Motordrehmoment wird der Motorsteuerung zugeführt und dort wird eine entsprechende Kraftstoffmenge passiv ausgegeben und das Ist-Drehmoment bereitgestellt. Der Leerlaufregler dient dabei zur unteren Begrenzung der Drehzahl. Entsprechend wird das Gesamtmoment des Motors (MD1) und das Getriebe-Istmoment (MD2) der Getriebesteuerung mitgeteilt. Aus diesen Werten der im Schritt 37 vorgegebenen Rampenfunktion wird im Schritt 39 die Endebedingung für die Rampe berechnet, wobei das Erreichen des Rampenendes durch eine Warteschleife 40 überwacht wird.

Bei Erreichen des Rampenendes wird von der Getriebesteuerung im Schritt 41 die für den jeweiligen Schaltvorgang optimale Solldrehzahl berechnet und als Getriebewunsch-Drehzahl (GW-N) der Motorsteuerung mitgeteilt. Gleichzeitig wird im Schritt 42 die Drehzahlregelung bei der Motorsteuerung angefordert, was durch Übersenden des Anforderungssignals für die Phase 2 (PH2) erfolgt. In der Motorsteuerung wird dann über die entsprechende Warteschleife 43 die Überleitung in die Phase 2 gesteuert.

In der Phase 2 wird zunächst im Schritt 44 auf die Drehzahlregelung umgeschaltet, der Umschalter 22 betätigt und die Umschaltung mittels der Statusmeldung PH 2 quittiert. Nun wird im Schritt 45 die Getriebewunschdrehzahl eingeregelt und das entsprechende Motordrehmoment bereitgestellt. Die mittlere Istdrehzahl Nist wird jeweils der Getriebesteuerung mitgeteilt, wo im Schritt 46 die Endebedingung der Drehzahlregelung berechnet wird. Dieses Ende der Drehzahlregelung, das gleichzeitig das Ende der Phase 2 bedeutet, wird in der Warteschleife 47 überwacht. Ist das Ende erreicht, wird im Schritt 48 das Aufregeln des Drehmoments in der Aufwärtsrampe der Phase 3 initiiert. Hierzu wird der Getriebesteuerung das begrenzte Fahrerwunsch-Drehmoment und das Ist-Drehmoment übermittelt. Nach der Initialisierungsphase wird im Schritt 49 das Getriebewunsch-Drehmoment der Motorsteuerung übermittelt. Weiterhin wird in der Rampenanforderungsstufe 54 die Aufwärtsrampe und mittels eines Phasensignals 50 die Einleitung der Phase 3 bei der Motorsteuerung angefordert. Über eine Warteschleife 51 wird dann zur Phase 3 umgeschaltet. Dort wird zunächst wiederum im Schritt 51 der Pfad anhand des übermittelten Getriebewunsch-Drehmoments durchgerechnet. Dann wird im Schritt 53 der Schalter 22 wieder in seine ursprüngliche Position zurückgelegt und der Schalter 21 so betätigt, daß die Vorgabestufe 24 wirksam wird, sofern der Schalter 21 nicht noch diese Position ohnehin innehat. Die Umschaltung wird durch die Statusmeldung PH3 bestätigt. Der restliche Ablauf der Phase 3 entspricht im wesentlichen dem der Phase 1 mit dem Unterschied, daß das Motordrehmoment mit der Aufwärtsrampe wieder hochgeregelt wird. So entsprechen die Schritte 37 bis 44 der Phase 1 hier in der Phase 3 den Schritten 54 bis 60. Nach der Warteschleife 57 erfolgt dann wiederum eine Umschaltung auf die Vorgabe des Motordrehmoments durch den Fahrer bzw. das begrenzte Fahrerwunschdrehmoment. Nach der Erzeugung des Phasensignals PH0 zur Umschaltung wieder in die Phase Null erfolgt der entsprechende Übergang über die Warteschleife 59 zur Schalterbetätigung des Schalters 21 im Schritt 60 in die ursprüngliche Schalterstellung. Gleichzeitig wird die Statusmeldung PH0 abgegeben.

Selbstverständlich müssen die Umschalter 21 bis 23 nicht als diskrete Schalter bzw. Halbleiterschalter realisiert sein, sondern es kann sich hierbei selbstverständlich auch um über die Software bewirkte Umschaltungen handeln.

## Patentansprüche

1. Verfahren zur Durchführung von Schaltvorgängen in einem automatisierten mechanischen Schaltgetriebe, das über eine automatisierte Kupplung mit einer Brennkraftmaschine, insbesondere einem Dieselmotor, verbunden ist, wobei das Soll-Motordrehmoment im wesentlichen über ein Fahrpedal oder einen Fahrgeschwindigkeitsregler oder -begrenzer vorgebbar ist, und wobei das Soll-Motordrehmoment bei Getriebeschaltvorgängen durch Eingriff einer elektronischen Steuereinrichtung verändert wird, gekennzeichnet durch die folgenden Verfahrensschritte:
dem für die Getriebesteuerung (20) vorgesehenen Bereich der elektronischen Steuereinrichtung (13) wird ständig das Soll-Motordrehmoment (MDsoll) zugeführt,
bei manuell oder automatisch eingeleiteten Getriebeschaltvorgängen erfolgt ein Umschaltvorgang auf die Vorgabe des Soll-Motordrehmoments durch die elektronische Getriebesteuerung (20), die dieses Soll-Motordrehmoment (GW-MD) in Abhängigkeit von Schaltparametern errechnet und/oder aus Schaltkennfeldern oder -kennlinien entnimmt, und
nach Abschluß des Schaltvorganges erfolgt wiederum ein Umschaltvorgang auf die Vorgabe des Soll-Motordrehmoments (MDsoll) durch das Fahrpedal (10) oder den Geschwindigkeitsregler oder -begrenzer (17, 18).

2. Verfahren nach Anspruch 1, dadurch gekennzeichnet, daß bei Getriebeschaltvorgängen jeweils in Phasen aufeinanderfolgende Regelvorgänge für das Soll-Motordrehmoment seitens der Getriebesteuerung (20) eingeleitet werden.

3. Verfahren nach Anspruch 1 oder 2, dadurch gekennzeichnet, daß die Vorgabe des Soll-Motordrehmoments (GW-MD) während eines Getriebeschaltvorgangs durch den für die Getriebesteuerung (20) zuständigen Bereich der elektronischen Steuereinrichtung (13) in Form eines Getriebewunsch-Motordrehmoments (GW-MD) und/oder einer Getriebewunsch-Motordrehzahl (GW-N) erfolgt.

4. Verfahren nach einem der Ansprüche 1 bis 3, dadurch gekennzeichnet, daß während eines Getriebeschaltvorgangs zunächst in einer Abregelphase das Motordrehmoment abgeregelt, dann in einer Drehzahlregelphase die Drehzahl auf einen vorgegebenen Wert in Abhängigkeit des jeweiligen Schaltvorgangs geregelt und dann in einer Aufregelphase das Motordrehmoment wieder hochgeregelt wird.

5. Verfahren nach Anspruch 4, dadurch gekennzeichnet, daß das Motordrehmoment in der Abregelphase und Aufregelphase durch Sollwert-Rampen vorgegeben wird.

6. Verfahren nach Anspruch 5, dadurch gekennzeichnet, daß die Rampenfunktionen bei Erreichen über Sollvorgabe beendet werden.

7. Verfahren nach einem der Ansprüche 4 bis 6, dadurch gekennzeichnet, daß bei den Übergängen zwischen den Phasen Umschaltvorgänge zur Umschaltung auf die der jeweiligen Phase zugeordneten Vorgabefunktionen durchgeführt werden.

8. Verfahren nach Anspruch 7, dadurch gekennzeichnet, daß die Umschaltungen durch hintereinander angeordnete Umschalteinrichtungen (21, 22) durchgeführt werden, die als Hardware-Schalter oder Software-Schalter realisiert sind.

9. Verfahren nach Anspruch 7 oder 8, dadurch gekennzeichnet, daß das Soll-Motordrehmoment als begrenztes Fahrerwunschmoment und als der Motorsteuerung tatsächlich vorgegebenes Soll-Motordrehmoment dem für die Getriebesteuerung (20) zuständigen Bereich der elektronischen Steuereinrichtung (13) zugeführt wird.

10. Verfahren nach einem der vorhergehenden Ansprüche, dadurch gekennzeichnet, daß nach jedem Umschaltvorgang eine entsprechende Statusmeldung ausgegeben wird.

11. Verfahren nach einem der vorhergehenden Ansprüche, dadurch gekennzeichnet, daß das Soll-Motordrehmoment in Form einer der Brennkraftmaschine zuzuführenden Kraftstoffmenge der Motorsteuerung (12) zugeführt wird, aus der für die Rückmeldungen an die Getriebesteuerung (20) die entsprechenden Drehmomentwerte (MDsoll) abgeleitet werden.

12. Verfahren nach einem der vorhergehenden Ansprüche, dadurch gekennzeichnet, daß das als Wunsch vorgegebene Soll-Motordrehmoment (GW-MD) in Abhängigkeit der verschiedenen jeweiligen Gangstufen zum Schutz des Getriebes begrenzt wird.
